(19) Europäisches Patentamt
European Patent Office
Office européen des brevets

(11) Veröffentlichungsnummer: **0 490 176 B1**

# (12) EUROPÄISCHE PATENTSCHRIFT

(45) Veröffentlichungstag der Patentschrift: **11.10.95**

(51) Int. Cl.6: **C08G 18/24**, C07F 7/22

(21) Anmeldenummer: **91120352.9**

(22) Anmeldetag: **28.11.91**

Die Akte enthält technische Angaben, die nach dem Eingang der Anmeldung eingereicht wurden und die nicht in dieser Patentschrift enthalten sind.

## (54) Polyurethan-Katalysatoren.

(30) Priorität: **11.12.90 DE 4039448**

(43) Veröffentlichungstag der Anmeldung:
**17.06.92 Patentblatt 92/25**

(45) Bekanntmachung des Hinweises auf die Patenterteilung:
**11.10.95 Patentblatt 95/41**

(84) Benannte Vertragsstaaten:
**BE DE ES FR GB IT NL**

(56) Entgegenhaltungen:
**EP-A- 0 060 974**
**DE-A- 1 943 695**
**GB-A- 1 163 857**

**JOURNAL GENERAL CHEMISTRY USSR Bd. 48, Nr. 711, Juli 1978, Seiten 1430 - 1432; KOTON ET AL: 'TIN-CONTAINING DIAMINES, DIANHYDRIDES AND POLYESTERIMIDES'**

(73) Patentinhaber: **Rhein Chemie Rheinau GmbH**
**Düsseldorfer Strasse 23-27**
**D-68219 Mannheim (DE)**

(72) Erfinder: **Ullrich, Volker, Dr.**
**Rappenbuckelweg 16**
**W-6905 Schriesheim (DE)**
Erfinder: **Schudok, Clemens, Dr.**
**Brunhildstrasse 27**
**W-6944 Hemsbach (DE)**

(74) Vertreter: **Gremm, Joachim, Dr. et al**
**Bayer AG**
**Konzernverwaltung RP**
**Patente Konzern**
**D-51368 Leverkusen (DE)**

**EP 0 490 176 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Katalysatoren zur Herstellung von massiven und geschäumten Polyurethanen.

Bei der Herstellung von Polyurethanen (PUR) nach dem Polyadditionsprinzip sind zur Aktivierung der Reaktion von Isocyanaten mit Polyolen oder/und der Reaktion von Isocyanaten mit Wasser verschiedene Substanzklassen als Katalysatoren bekannt, z.B. Amine (cyclische, acyclische; Monoamine, Diamine, Oligomere mit einer oder mehreren Aminogruppen) und metallorganische Verbindungen, vornehmlich die des Zinn, Eisen, Wismut und Quecksilber (vgl. Kunststoff-Handbuch, Bd. 7, S. 92-99, Karl-Hanser-Verlag, München (1983)).

In den meisten Fällen werden als Katalysatoren nicht einzelne Verbindungen, sondern Gemische mehrerer Komponenten eingesetzt, um die erforderlichen Eigenschaften und dazu notwendigen Reaktionsparameter einzustellen (vgl. Z. Polymerforsch. 28 (1977), 405). Dies ist bei der technischen Herstellung von PUR notwendig, weil bestimmte Parameter vorgegeben sind, die nur durch gezielte Mischung von verschiedenen Katalysatoren einzuhalten sind.

Die meisten Amin-Katalysatoren riechen stark und migrieren aus dem PUR. Ihre Verwendung ist daher eingeschränkt (vgl. DE-OS 2 523 633).

Gegenstand der Erfindung sind migrationsbeständige und geruchslose Katalysatoren für die Herstellung von Polyurethanen und ein Verfahren zu ihrer Herstellung.

Die erfindungsgemäßen Katalysatoren sind Umsetzungsprodukte von Dibutylzinnoxid mit 2-Aminobenzoesäure oder aromatischen Aminocarbonsäuren der Formel

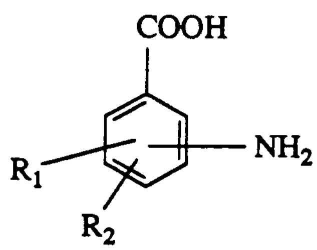

(I)

worin

$R_1$ und $R_2$ unabhängig voneinander -OH, Cl, $-NH_2$, $-(CH_2)_n-CH_3$ (n = 1-6) und $R_2$ zusätzlich H bedeuten, im Molverhältnis 1:2.

Bevorzugte Verbindungen der Formel (I) sind

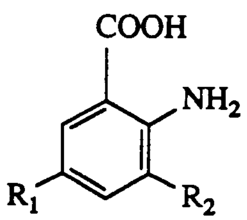

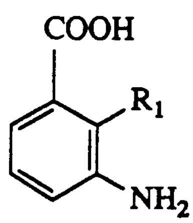

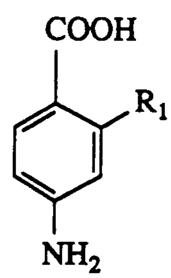

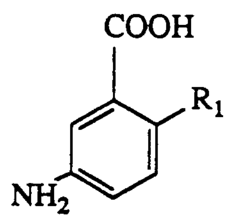

mit

$R_1$ und $R_2$ = OH, Cl, $NH_2$, $(CH_2)_n-CH_3$ (n = 1-6), und $R_2$ zusätzlich H.

Die Umsetzungsprodukte sind kristallin, geruchlos und in Polyetherpolyolen, Polyesterpolyolen, sowie in den üblichen Glykolen wie Ethylenglykol und Dipropylenglykol klar löslich.

Die Herstellung der Katalysatoren kann durch die allgemeine Reaktionsgleichung

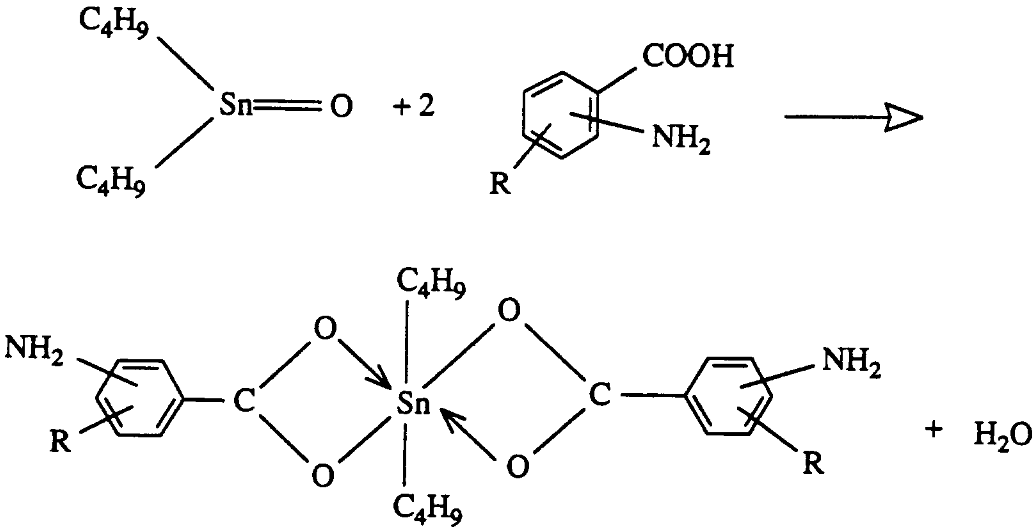

beschrieben werden.

Man setzt Dibutylzinnoxid mit 2-3 Mol der entsprechenden Aminocarbonsäure, vorzugsweise mit 2-2,5 Mol in einem inerten Lösungsmittel um. Bei der Reaktion zum entsprechenden Zinn-Dicarboxylat wird das entstehende Wasser azeotrop abdestilliert. Als Aminocarbonsäuren werden eingesetzt: 3,5-Diaminobenzoesäure, 4-Amino-2-hydroxybenzoesäure, 2-Amino-3-hydroxybenzoesäure, 2-Aminobenzoesäure, 3-Amino-2-hydroxybenzoesäure, 5-Amino-2-hydroxybenzoesäure, 2-Amino-4-hydroxybenzoesäure, 2-Amino-5-hydroxybenzoesäure, 3,4-Diaminobenzoesäure, 4-Amino-3-methylbenzoesäure, 2-Amino-6-methylbenzoesäure, 2-Amino-3-methylbenzoesäure, 2-Amino-5-methylbenzoesäuere, 2-Amino-5-chlorbenzoesäure, 3-Amino-4-chlorbenzoesäure, 4-Amino-2-chlorbenzoesäure, 5-Amino-2-chlorbenzoesäure, 2-Amino-3-octylbenzoesäure, 2-Amino-3-hexylbenzoesäure.

Man setzt DIbutylzinnoxid mit ca. 2 Mol der entsprechenden aromatischen Aminocarbonsäure in Substanz unter azeotroper Abdestillation von Wasser zum entsprechenden Zinn-Dicarboxylat um.

Diese Katalysatoren sind im Gegensatz zu den bislang für die PUR-Herstellung verwendeten Zinnverbindungen wie z.B. Dibutylzinndilaurat und Dibutylzinndiacetat nicht hydrolyseanfällig. Polyolformulierungen, welche Wasser, Katalysatoren, gegebenenfalls Stabilisatoren, Farben, Flammschutzmittel oder andere Füllstoffe enthalten können, sind unter Verwendung der beschriebenen Katalysatoren Lagerstabil, ohne ihre Reaktivität einzubüßen.

Die Katalysatoren können in einer Menge von 0,01 bis 1 Gew.-%, insbesondere von 0,1 bis 0,6 Gew.-%, bezogen auf das Polyol, eingesetzt werden.

## Beispiele

### A. Herstellung der Katalysatoren

#### Beispiel 1

Herstellung von Zinn-di-n-butyl-di-(3,5-amino)-benzoat

232,6 g 3,5-Diaminobenzoesäure (1,53 Mol) und 190,3 g Dibutylzinnoxid (0,765 Mol) werden in 800 ml Cyclohexan am Wasserabscheider unter Rückfluß erhitzt. Nach Entfernen des Reaktionswassers läßt man abkühlen und das Produkt auskristallisieren. Man filtriert ab und kristallisiert aus Ethanol um. Es wird ein weißes, kristallines Pulver erhalten.
Die Ausbeute beträgt 374 g = 91 % der Theorie.
Schmelzpunkt: 166 °C

| Analyse: | C = 48,4 % | (Theorie: 49,1 %) |
|---|---|---|
| | H = 5,4 % | (Theorie: 5,95 %) |
| | N = 10,7 % | (Theorie: 10,41 %) |

Beispiel 2

Herstellung von Zinn-di-n-butyl-di-(4-amino-2-hydroxy)-benzoat

274 g 4-Amino-2-hydroxy-benzoesäure (1,53 Mol) und 190,3 g Dibutylzinnoxid (0,765 Mol) werden in 100 ml Xylol am Wasserabscheider unter Rückfluß erhitzt. Nachdem alles Reaktionswasser entfernt ist, läßt man erkalten und auskristallisieren. Das Produkt wird abgesaugt, ans Methanol unkristallisiert und i.V. getrocknet. Man erhält ein leicht gelbes, kristallines Produkt mit dem Schmelzpunkt 120-126 ° C.
Die Ausbeute beträgt 392 g = 95,5% der Theorie.

| Analyse: | C = 47,5 % | (Theorie: 49,2 %) |
|---|---|---|
| | H = 6,05 % | (Theorie: 5,59 %) |
| | N = 5,03 % | (Theorie: 5,22 %) |

B. Anwendungsbeispiele

Beispiel 3

Herstellung eines PUR-Elastomeres

**Rezeptur:**

| | | | | |
|---|---|---|---|---|
| **Polyol** | : | **43 Teile** | } | |
| **Füllstoff** | : | **56,5 Teile** | } | **Komponente A** |
| **Katalysator** | : | **0,5 Teile** | } | |
| **Isocyanat** | : | **45 Teile** | = | **Komponente B** |

Die Komponenten Polyol, Füllstoff und Katalysator werden bei 20 ° C homogen miteinander vermischt.

Zur Bestimmung der Aktivität eines Katalysators wird in einer homogenen Mischung aus der Komponente A und der Komponente B die Zeit bis zur völligen Aushärtung des PUR-Systems gemessen (Topfzeit).

Die Lagerstabilität eines Katalysators wird geprüft, indem die den Katalysator enthaltende Komponente A bei 60 ° C in verschlossenem Gebinde gelagert wird und die Änderung der Topfzeit über die Lagerzeit ermittelt wird.

Bei der Verwendung von Dibutylzinndilaurat wurde ein Anstieg der Topfzeit von 2 Min. auf mehr als 10 Min. nach 30 Tagen gemessen. Bei der Verwendung von Zinn-di-n-butyl-di-(3-amino)-benzoat war die Topfzeit selbst nach 90 Tagen Lagerung unverändert 2 Minuten.

Dibutylzinnlaurat zersetzte sich innerhalb von 30 Tagen weitgehend, Zinn-di-n-butyl-di-(3-amio)-benzoat dagegen nicht (es konnten keine Zersetzungsprodukte nachgewiesen werden). Deshalb bleibt auch nach der langen Lagerzeit die katalytische Wirkung voll erhalten.

Beispiel 4

Herstellung eines PUR-Hartschaumes

**Rezeptur:**

| | | | | |
|---|---|---|---|---|
| Polyol | : | 95,5 Teile | | |
| Füllstoff | : | 3,5 Teile | } | Komponente A |
| Katalysator | : | 1,0 Teile | | |
| Isocyanat | : | 160 Teile | = | Komponente B |

Die Komponenten Polyol, Wasser und Katalysator werden bei 20 °C homogen miteinander vermischt.

Zur Messung der katalytischen Wirkung des Aktivators wird in einer homogenen Mischung der Komponenten A und B die Zeit bis zur völligen Aushärtung des PUR-Schaumsystems gemessen (Klebfreizeit). Die hydrolytische Stabilität eines Aktivators wird geprüft, indem die den Katalysator enthaltende Komponente A bei 25 °C im verschlossenen Gebinde gelagert wird und die Verlängerung der Klebfreizeit in bestimmten Zeitabständen gemessen wird.

Bei Verwendung von Dibutylzinndiacetat war aufgrund von Hydrolyse bereits nach 10 Tagen Lagerung die katalytische Aktivität Null.

Bei der erfindungsgemäßen Verwendung von Zinn-di-n-butyl-di-(3,5-diamino)-benzoat blieb die Reaktivität nach einer Lagerung der Komponente A über 60 Tage bei 25 °C unverändert. Es konnten keine Zersetzungsprodukte des Katalysators nachgewiesen werden.

**Patentansprüche**

1. Umsetzungsprodukte von 1 Mol Dibutylzinnoxid und 2 Mol 2-Aminobenzoesäure oder einer aromatischen Aminocarbonsäure der Formel

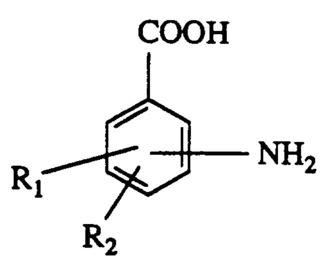

(I)

worin

$R_1$ und $R_2$ unabhängig voneinander -OH; Cl, $-NH_2$, $-(CH_2)_n-CH_3$ ($n = 1-6$) und $R_2$ zusätzlich H bedeuten.

2. Verwendung der Umsetzungsprodukte gemäß Anspruch 1 als Katalysatoren für die Polyurethanherstellung.

3. Verfahren zur Herstellung der Umsetzungsprodukte gemäß Anspruch 1, dadurch gekennzeichnet, daß man 2 Mol 2-Aminobenzoesäure oder einer Aminocarbonsäure der Formel (I) mit 1 Mol Dibutylzinnoxid unter azeotroper Destillation des gebildeten Wassers umsetzt.

## Claims

1. Reaction products of 1 mole of dibutyltin oxide and 2 moles of 2-aminobenzoic acid or of an aromatic aminocarboxylic acid of formula

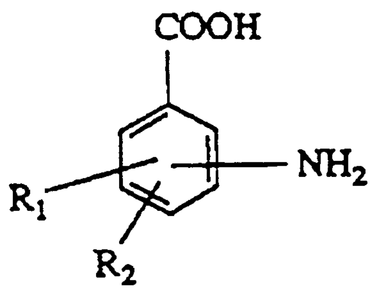

(I)

where
$R_1$ and $R_2$ denote, independently of each other, -OH; Cl, $-NH_2$ or $-(CH_2)_n-CH_3$ (n = 1-6), and $R_2$ in addition denotes H.

2. Use of the reaction products according to claim 1 as catalysts for polyurethane production.

3. A method of preparing the reaction products according to claim 1, characterised in that 2 moles of 2-aminobenzoic acid or of an aminocarboxylic acid of formula (I) are reacted with 1 mole of dibutyltin oxide with azeotropic distillation of the water formed.

## Revendications

1. Produits réactionnels de 1 mol d'oxyde de dibutylétain et de 2 mol d'acide 2-aminobenzoïque ou d'un acide aminocarboxylique aromatique de formule :

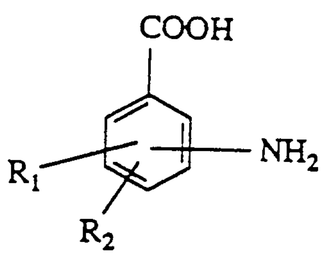

(I)

dans laquelle
$R_1$ et $R_2$ représentent chacun indépendamment -OH, Cl, $-NH_2$, $-(CH_2)_n-CH_3$ (n = 1-6) et $R_2$ représente de plus H.

2. Utilisation des produits réactionneis selon la revendication 1 en tant que catalyseurs pour la production de polyuréthanes.

3. Procédé de production des produits réactionnels selon la revendication 1, caractérisé en ce qu'on fait réagir 2 mol d'acide 2-aminobenzoïque ou d'un acide aminocarboxylique de formule (I) et 1 mol d'oxyde de dibutylétain avec une distillation azéotrope de l'eau formée.